# EUROPÄISCHE PATENTSCHRIFT

(11) **EP 2 522 482 B1**
(45) Veröffentlichungstag und Bekanntmachung des Hinweises auf die Patenterteilung: **25.05.2016**
(21) Anmeldenummer: 12178952.3
(22) Anmeldetag: 14.06.2010
(51) Int. Cl.: B29C 49/18, B29C 45/72, B29C 49/06, B29C 49/64, B29C 49/42

(54) **Verfahren und Vorrichtung zur Herstellung von Vorformlingen mit Spezialgeometrien**
Method and device for the manufacture of preforms with special geometries
Procédé et dispositif de fabrication de préformes avec géométrie spéciale

(30) Priorität: 27.06.2009 DE 102009030762
(43) Veröffentlichungstag der Anmeldung: 14.11.2012
(62) Teilanmeldung aus: 10723144.1
(73) Patentinhaber: Netstal-Maschinen AG, 8752 Näfels (CH)
(72) Erfinder: Bock, Stefan, 8750 Glarus (CH); Scheunemann, Britta, 8750 Glarus (CH)
(74) Vertreter: Wilhelm, Ludwig

(56) Entgegenhaltungen:
- EP-A2- 0 162 458
- FR-A1- 2 337 025
- FR-A1- 2 531 003
- JP-A- 4 119 819
- JP-A- 59 002 818

## Beschreibung

Die vorliegende Erfindung betrifft ein Verfahren und eine Vorrichtung zur Herstellung von Preformen gemäß dem Oberbegriff der Ansprüche 1 bzw. 9.

Bei der Herstellung von Kunststoffflaschen ist es üblich, zunächst einen sogenannten Vorformling oder Preform herzustellen, der in einem nachfolgenden Schritt durch ein Blasformverfahren zu einer fertigen Kunststoffflasche aufgeblasen wird. Ein Blasformen von irgendwann hergestellten, vorgefertigten Preformen zu fertigen Kunststoffbehältern ist aus JP 59 002818 A und JP 4 119819 A bekannt.

Es ist aber auch bekannt, Kunststoffflaschen im sogenannten einstufigen Spritzstreckblasformen herzustellen. Hierzu sei auf die FR 2 531 003 A1 und die FR 2 337 025 A1 verwiesen.

Bei der Preformherstellung wird herkömmlicherweise zunächst ein Kunststoffmaterial (z. B. Kunststoffgranulat) aufgeschmolzen und in die Kavitäten eines geschlossenen Spritzgießwerkzeuges eingebracht. Ein solches Spritzgießwerkzeug besitzt in der Regel eine Vielzahl von gleichen Kavitäten, welche auch als Formnester bezeichnet werden.

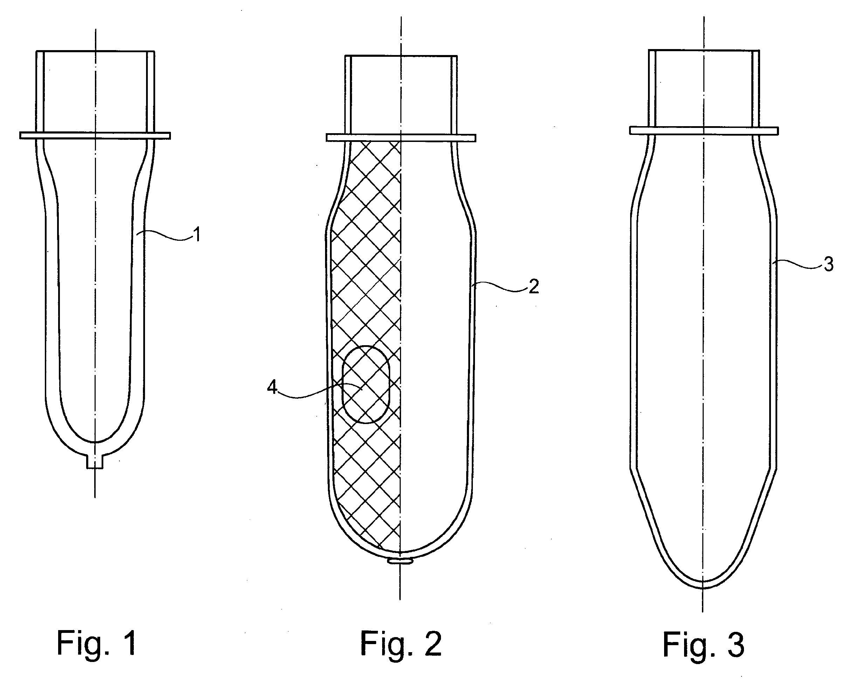

Um die Preform-Geometrie gemäß Fig. 1 auszubilden, umfassen die Formnester neben einem sogenannten Neck- oder Halsbereich eine Kavitätsausnehmung, in die ein Kern hineinragt. Der Kern definiert den Innenraum des Preforms, die Kavitätsausnehmung zusammen mit dem Neck- oder Halsbereich die Außenkontur des Preforms - zusammen legen sie also die Geometrie des Preforms fest.

Nach dem Einspritzen der Kunststoffschmelze in die Mehrfachkavitäten wird ein erster Kühlvorgang durchgeführt, um eine ausreichende Steifheit für die Preformen zu erlangen, die eine Öffnung des Spritzgießwerkzeuges ermöglicht. Nach dem Öffnen des Spritzgießwerkzeuges wird die hergestellte Charge von Preforms herkömmlicherweise mit einem Entnahmegreifer aus dem Werkzeug entnommen, wobei hierzu bei bekannten Verfahren jeder Preform in eine zugeordnete, zumeist gekühlte Entnahmehülse eines Entnahmegreifers überführt wird.

Nach dem Entnehmen der Preformen aus dem Spritzgießwerkzeug ist es bekannt, die Preformen mittels eines Transfergreifers aus dem Entnahmegreifer in eine weitere Nachkühleinrichtung umzusetzen. Nach einem ausreichenden Abkühlen der Preformen in dieser Nachkühleinrichtung werden diese dann entweder unmittelbar einer Blasform-Anlage zugeführt oder zum Aufbewahren und Transportieren in einen Karton verpackt.

Für eine hohe Effizienz der Anlage ist es wichtig, die Zykluszeit möglichst kurz zu halten, um möglichst viele Preformen herstellen zu können. Einer weiteren Verkürzung der Zykluszeit steht aber entgegen, dass eine erhebliche Wärme jeweils aus den Preformen abgeführt werden muss, um sie nachhaltig auf ein für die Verpackung akzeptables Temperaturniveau zu bringen.

Dies geschieht zum einen bereits im Spritzgießwerkzeug selbst, wo eine sehr aggressive Kühlung sowohl über dem Kern wie auch über die Kavitätseinrichtung vorgesehen ist. Auch die Entnahmehülsen des Entnahmegreifers sind in der Regel (wasser-) gekühlt.

Ein Verfahren und eine Vorrichtung der vorgenannten Art sind beispielsweise aus der WO 00/24562 A1 bekannt.

Zudem wurde unter dem Markennamen "Calitec" der Firma Netstal ein Verfahren eingeführt, bei dem der Innenraum der Preformen, die sich im Entnahmegreifer befinden, unter Druck gesetzt werden, so dass sich diese mit ihrer Außenwandung innig an der Wandung des Entnahmegreifers anlagern und eine besonders gute Kühlung sowie auch eine Rekalibrierung sichergestellt wird. Zu diesem Zweck weisen die Transferpins des Transfergreifers Einrichtungen zum Abdichten des Innenraums der Preformen sowie zum Einbringen eines Fluids, beispielsweise von Luft, auf. Ein diesbezügliches Verfahren und eine diesbezügliche Vorrichtung sind aus WO 2008/000108 A1 bekannt.

Bei dem vorgenannt beschriebenen Ablauf ist es üblich, einen Preform mit einem Design zu generieren, wie er in Fig. 1 dargestellt ist. Die Art des Designs ergibt sich in der Regel daraus, dass bei der Entnahme der Preformen aus dem Spritzgießwerkzeug zum einen der Kern aus dem Innenraum des Preforms herausgezogen werden muss und zum anderen der Preform selbst aus der Kavität entnommen werden muss. Diese beiden Vorgänge würden bei einer Preform-Geometrie, wie sie in Fig. 2 dargestellt ist, nicht unmittelbar und ohne weiteres vorgenommen werden können. Zumindest ein einteilig ausgebildeter Kern könnte in der Regel nicht aus dem Innenraum herausgezogen werden.

Auf der anderen Seite haben Preform-Geometrien, wie sie in den Figuren 2, 3 und 8 gezeigt sind, einige Vorteile, die nachfolgend noch erläutert werden.

Aus diesem Grunde ist es Aufgabe der vorliegenden Erfindung, ein Verfahren und eine Vorrichtung anzugeben, mit denen sich Preformen mit einer Spezialgeometrie, z.B. einer Ausweitung im Bodenbereich erzeugen lassen, wobei der fertig gestellte Preform einen Halsbereich mit einem Gewinde oder einer anderen Verschlussvorrichtung aufweist und sich an den Halsbereich ein Preformkörper mit einem gegenüber der Kavität im Spritzgießwerkzeug größeren bzw. aufgeweiteten Preformkörper anschließt.

Diese Aufgabe wird durch die in den Ansprüchen 1 und 9 genannten Merkmale Verfahrens- bzw. vorrichtungsmäßig gelöst.

Ein Kerngedanke der Erfindung ist darin zu sehen, dass die aus dem Werkzeug entnommenen Preformen in der Entnahmeeinrichtung temperaturmäßig zunächst konditioniert werden, d.h. auf ein bestimmtes Temperaturniveau gebracht werden, welches zum einen die Kristallisierungsgefahr bereits signifikant reduziert, zum anderen aber eine weitere Verformung des Preforms ermöglicht. Im Gegensatz zu den bisherigen Systemen wird für einen nachfolgenden Blasvorgang evtl. nicht so stark wie möglich abgekühlt, um einen bereits möglichst verfestigten Preform zu erhalten.

Dabei können während der Konditionierung die Transferpins eingesetzt werden, um den Innenraum abzudichten und unter Druck zu setzen, so dass eine optimale Kontaktierung der Hülsenwand und damit Konditionierung und Formgebung sichergestellt ist.

Gemäß der vorliegenden Erfindung ist es nun bereits möglich, im Entnahmegreifer selbst einen Blasvorgang durchzuführen, und dabei beispielsweise den Boden des Preforms, insbesondere in seiner axialen Erstreckung auszublasen. In diesem Fall müsste die Kavität in den Entnahmehülsen des Entnahmegreifers im Bodenbereich entsprechend vergrößert ausgebildet sein. Der radiale Außenumfang des Preforms würde sich dadurch im wesentlichen nicht verändern, was auch nicht ohne weiteres möglich wäre, da ansonsten der Preform nicht sicher aus dem Spritzgießwerkzeug herausgeführt werden könnte. Mit dieser Vorgehensweise ist es möglich, Preformböden zu formen, wie sie beipielsweise in den WO 2008/041186 A2 angegeben und die für das spätere Streckblasen von Vorteil sind. Mit einem sog. "Capello-Design" können Preformen mit einem dünneren Preformboden gebildet werden, unter anderem mit dem Vorteil einer Materialersparnis sowie einer schnelleren Kühlmöglichkeit. Dies ist insbesondere dann interessant, wenn die spritzgießtechnische Herstellung solcher Konturen Nachteile aufweist.

Nach dieser Konditionierung, die schneller erfolgen kann als die bisherige Kühlung, insbesondere dann wenn nur oder auch in der Nachkühleinrichtung ein Aufblasvorgang stattfindet, weil dann die Preformen nicht zwangsweise auf ein so niedriges Temperaturniveau geführt werden müssen, werden die Preformen mit dem Transfergreifer aus der Entnahmehülse entnommen und in die Nachkühleinrichtung überführt. Die Kavitäten der Nachkühleinrichtung (die auch als Blasformvorrichtung bezeichnet werden kann) sind dabei gegenüber dem im Spritzgießwerkzeug hergestellten Preform derart vergrößert, dass insbesondere die radiale Erstreckung des Innenraums im aufgeblasenen Preform größer ist, als die radiale Erstreckung des Innenraums im Halsbereich des Preforms. Natürlich kann auch eine axiale Aufweitung erfolgen. Damit entsteht ein aufgeweiteter Schulterbereich, der in einer Spritzgießform einen Hinterschnitt darstellen würde und nicht ohne weiteres entformt werden könnte.

Durch kontinuierliches oder nochmaliges Abdichten des Preforminnenraums mit dem Transfergreifer und entsprechender Druckbeaufschlagung des Preforminnenraums mit einem Fluid (beispielsweise Luft), wird der vorher im Entnahmegreifer temperaturmäßig konditionierte Preform nunmehr im Bereich des Preformskörpers aufgeblasen und legt sich an die Wandung der Blasformkavitäten der Nachkühleinrichtung an. Dieses Aufblasen ist jedoch nur ein "Voraufblasen" im Sinne des später herzustellenden fertigen Kunststoffproduktes und wird daher nachfolgend auch als "Preblowing" bezeichnet, da zur ein Zwischenprodukt für eine fertige Kunststoffflasche oder einen fertigen Kunststoffbehälter hergestellt wird. Für die Herstellung einer fertigen Kunststoffflasche oder eines fertigen Kunststoffbehälters bedarf es eines weiteren Blasformschrittes.

Auf die oben angegebenen Weisen können Preformen mit einer Hinterschnittgeometrie, bei der der Durchmesser des Preformkörpers größer ist, als sein Hals- oder Neckbereich, sich sein Schulterbereich also nach außen vergrößert und/oder mit einem Capello-Design hergestellt werden. Dabei kann entweder in der Entnahmehülse oder in der Nachkühleinrichtung oder in beiden Einrichtungen ein Blasformvorgang durchgeführt werden.

Ein solcher Preform bietet eine Vielzahl von Vorteilen. Durch das Aufblasen der Preforms vergrößert sich insgesamt der Preformkörper, wodurch bei einem späteren Blasformschritt mehr Infrarotlicht einer Blasformmaschine absorbiert werden kann, mit denen der Preform zum Blasformen wieder aufgeheizt wird. Dies führt zu signifikanten Energieeinsparungen und geringeren Investitionskosten an der Blasformmaschine bzw. beim Betrieb derselben. Weiterhin verkleinert sich durch das Aufblasen des Preforms die Wandstärke, wie in den Figuren 1 - 3 erkennbar ist. Der ursprünglich hergestellte Preform weist eine dickere Wandstärke 1 auf, wohingegen die Preform-Geometrien mit Hinterschnitt dünnere Wandstärken 2 und 3 besitzen. Damit kann der Preform deutlich schneller und genauer auf die optimale Streckblastemperatur gebracht werden, als dies bisher möglich ist. Auch hier kann mit einer zusätzlichen Energieeinsparung und geringeren Investitionskosten bei der Blasformmaschine gerechnet werden. Zudem kann man je nach Preform-Geometrie evtl. Kunststoffmaterial einsparen.

Ferner ist es möglich, den Preform in der Nachkühleinrichtung mit einer Oberflächenstruktur zu versehen, wodurch die Gesamtoberfläche des Preforms auf seiner Außenseite stark vergrößert wird, so dass wiederum mehr Energie absorbiert werden kann. Dies würden die beiden vorgenannten Effekte nochmals verstärken. Die Oberflächenstruktur würde sich dann beim Streckvorgang des späteren Blasformens wieder verlieren.

Die Preform-Geometrie bietet aber nicht nur Vorteile für den späteren Blasformprozess; sie hat auch Vorteile für den eigenen Herstellprozess. Aufgrund der dünneren Wand der Preformen in den gekühlten Blasform- bzw. Nachkühleinrichtungen lässt sich auch hier die Kühlzeit insgesamt verringern, was zu kürzeren Zykluszeiten beiträgt. Dies führt vorteilhafterweise auch dazu, dass sich die Gefahr des Kristallisierens gegenüber Preforms mit dicken Wandstärken deutlich reduziert. Auch lässt sich aufgrund der Konditionierung anstelle der bisherigen starken Kühlung die Verweilzeit im Entnahmegreifer reduzieren.

Weitere Vorteile und Merkmale der Erfindung sind in den Unteransprüchen definiert.

So sollte die als Blasformeinrichtung wirkende Nachkühleinrichtung vorzugsweise wassergekühlt werden. Je aggressiver diese Kühlung ist, desto besser. Entsprechend der Aggressivität der Kühlung verringert sich die Zykluszeit wie auch die Gefahr des Kristallisierens der Preformen.

Im Entnahmegreifer hingegen sollte der Preform vorzugsweise auf eine Temperatur konditioniert werden, die für einen späteren Blasformvorgang günstig ist. Ein solcher Temperaturbereich liegt beispielsweise zwischen 90 und 150° C. Dies ist natürlich nur dann notwendig, wenn ein anschließender Blasformvorgang erfolgt. Ohne einen solchen Blasformvorgang in der Nachkühleinrichtung kann auch wieder sehr aggressiv gekühlt werden.

Eine signifikante Verformung des Hals- oder Neckbereiches des Preforms ist bei keinem dieser Schritte beabsichtigt. Um eine solche Verformung beispielsweise während des Abdicht- oder Überdruckschrittes zu vermeiden, wird der Preform vorzugsweise zumindest während der Ausbildung des Überdrucks im Halsbereich bzw. zumindest in Teilen des Halsbereiches von außen abgestützt. Diese Abstützeinrichtung kann in Form von einer zwei- oder mehrteilig öffen- und schließbaren Backeneinrichtung ausgebildet sein, die jeweils im Bereich jeden Transferpins des Transfergreifers angeordnet werden.

Die Backeneinrichtungen sind vorzugsweise so ausgebildet, dass sie sich mit der als Blasformeinrichtung dienenden Nachkühleinrichtung derart kombinieren und/oder koppeln lassen, dass der aufgeblasene Preform während des Blasschrittes vollumfänglich bis in seinen Halsbereich abgestützt ist. Gemäß einer vorteilhaften Ausführungsform der Erfindung, können die Backeneinrichtungen ebenfalls gekühlt, insbesondere wassergekühlt sein.

Das Konditionieren wird insbesondere dann noch unterstützt bzw. beschleunigt, wenn auch während der Aufnahme des Preforms in einer Entnahmehülse dessen Innenraum zumindest zeitweise unter Druck gesetzt wird (auch wenn in der Entnahmehülse kein Blasformvorgang stattfindet). Ein solcher Überdruck kann im Bereich von 0,5 - 8 bar gehalten werden.

Da die Entnahme aus der Entnahmeeinrichtung bzw. dem Entnahmegreifer recht schnell passieren kann - und zwar aufgrund der anstelle der bisherigen Kühlung nun anstehenden Konditionierung der Preforms auf beispielsweise 120° sowie der größeren dimensionsmäßigen Ausdehnung der Preforms - kann es notwendig sein, zwei oder mehrere Nachkühleinrichtungen vorzusehen, in welche die Preforms aus dem Entnahmegreifer abwechselnd überführt werden können. Die Nachkühleinrichtungen können auch so ausgestaltet sein, dass sie ein Zwei-, Drei- oder Mehrfaches der Charge einer im Spritzgießwerkzeug hergestellten Preformcharge aufnehmen.

Insgesamt lassen sich mit der erfindungsgemäßen Vorrichtung Preformen mit einem Hinterschnitt in einer schnellen Zykluszeit herstellen, wobei diese Geometrie nachfolgend auch Vorteile bei der Weiterverarbeitung in einer Blasformmaschine aufweist. So ergeben sich mehrfache Effizienzsteigerungen sowohl beim eigentlichen Produktionsvorgang des Preforms als auch beim späteren Bearbeitungsschritt.

Die Erfindung wird nachfolgend und mit Bezug auf die beigefügten Zeichnungen näher erläutert. Die Zeichnungen zeigen in
- Fig. 1: eine Querschnittsansicht eines Preforms mit einer herkömmlichen Geometrie, wie er mit einem Spritzgießwerkzeug hergestellt wird,
- Fig. 2: eine Querschnittsansicht eines Preforms mit einer Geometrie mit Hinterschnitt,
- Fig. 3: eine Querschnittsansicht eines Preforms mit einer weiteren Geometrie mit Hinterschnitt und veränderter Bodengeometrie,
- Fig. 4: eine Schnittdarstellung eines in einer Entnahmenahmehülse eines Entnahmegreifers aufgenommenen Preforms mit eingeführtem Transferpin,
- Fig. 5: eine Schnittdarstellung eines in die Kavität einer Nachkühleinrichtung überführten, noch nicht aufgeblasenen Preforms mit eingeführtem Transferpin,
- Fig. 6: eine Schnittdarstellung eines nunmehr in der Nachkühleinrichtung aufgeblasenen Preforms mit Hinterschnitt im Schulterbereich,
- Fig. 7: eine schematische Darstellung mit Schnittzeichnungen von Entnahme- und Blasformvorrichtung, mit der die generelle Arbeitsweise der Vorrichtung beschrieben wird, und
- Fig. 8: eine Ansicht eines Preforms mit einem Capello-Design im Bodenbereich.

Anhand der Zeichnungen soll die Vorgehensweise bei der Herstellung eines Preforms mit einer Hinterschnitt-Preform-Geometrie erläutert werden. Dabei bedeutet "Hinterschnitt", dass sich ein Preform im Bereich seiner Schulterpartie radial aufweitet, so dass der Hinterschnitt gegenüber Kavitätsform des Spritzgießwerkzeugs entsteht.

Zwei solche Hinterschnitt-Geometrien sind in den Figuren 2 und 3 dargestellt, wobei Fig. 3 auch eine Veränderung der Bodenkontur zeigt. Dabei ist nicht nur die Außendimension bzw. der Außendurchmesser des Preforms im Preformkörperbereich größer als im Hals- oder Neckbereich, sondern es ist insbesondere der radiale Durchmesser des Innenraums Durchmesser im Preformkörper größer als der radiale Innenraum im Hals- oder Neckbereich. Diese Geometrie kann nicht ohne weiteres in einer Spritzgießform hergestellt werden. Es müsste zumindest ein Kern verwendet werden, der im Bereich des Preformkörpers radial zusammengezogen werden könnte.

Um mit der herkömmlichen Spritzgießtechnik dennoch einen wie in den Fig. 2 und 3 gezeigten Preform produzieren zu können, wird der Preform zunächst in üblicher Weise in einem Spritzgießwerkzeug hergestellt und nach dem ersten Abkühlen und dem Öffnen des Werkzeugs in üblicher Weise mit einem Entnahmegreifer entnommen. Der Entnahmegreifer weist dabei eine Vielzahl von Entnahmehülsen auf, in denen der Preform meist bis zum Hals- oder Neckbereich eingeführt wird.

Sowohl die Spritzgießmaschinen mit Spritzgießwerkzeug wie auch die Entnahmeeinrichtungen sind aus dem Stand der Technik hinlänglich bekannt.

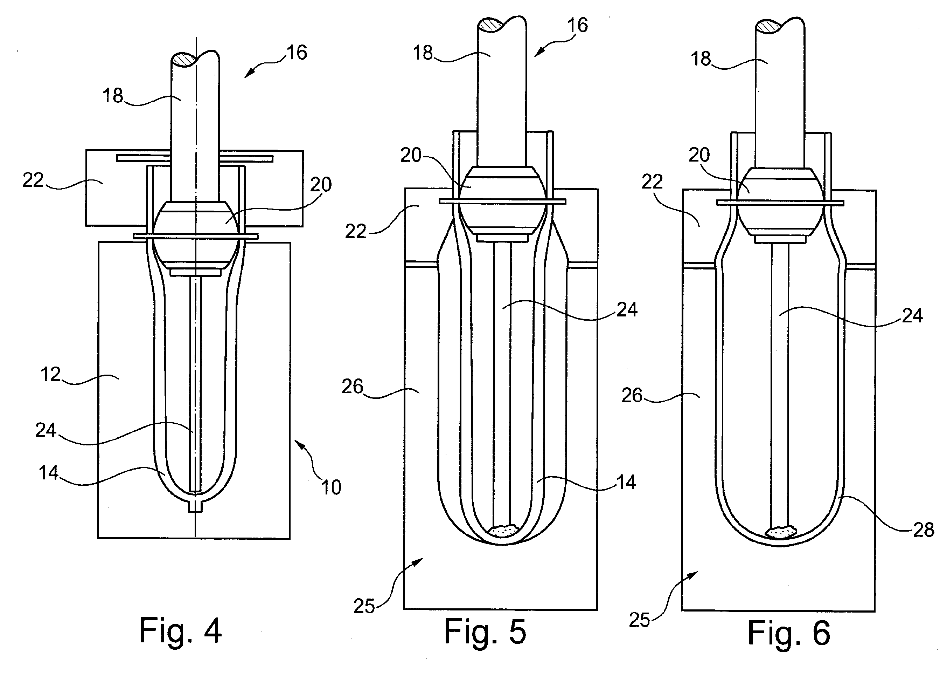

In Fig. 4 ist von einer solch bekannten Entnahmeeinrichtung 10 lediglich eine einzelne Entnahmehülse 12 aus einer Vielzahl von Entnahmehülsen dargestellt, um die Aufnahme des im vorherigen Schritt im Spritzgießwerkzeug hergestellten Preforms 14 zeigen zu können. Der zunächst hergestellte Preform 14 weist eine herkömmliche Form mit einer relativ dicken Wandstärke auf und ist in seinem Körperbereich fast vollständig in der Hülse aufgenommen, die (was vorliegend nicht näher dargestellt ist) wassergekühlt ist. Auf diese Kühlung, egal ob mit Luft oder Wasser, muss vorliegend nicht näher eingegangen werden, da sie ebenfalls aus dem Stand der Technik in vielfältigen Ausführungsvarianten bekannt ist.

In den in Fig. 4 dargestellten Preform eingeschoben ist das vordere Ende eines Transferpins eines Transfergreifers 16, wobei der Transfergreifer 16 eine der Anzahl der Entnahmehülsen 12 entsprechende Anzahl von Transferpins 18 aufweist. Am vorderen Ende des Transferpins ist eine elastische Dichteinrichtung vorgesehen, die sich durch Kompression in ihrer Radialdimension verändern (verbreitern) lässt. Insbesondere wird ein Schaft (nicht dargestellt) des Transferpins nach vorne geschoben, um die elastische Manschette zu komprimieren und radial nach außen zu drücken, wodurch sie sich an die Innenwand des Preforms anlagert und den Innenraum des Preforms zum einen gegenüber der Außenumgebung abdichtet und zum anderen hält. Diese Anlagerung erfolgt insbesondere im Bereich des Neckrings, wo eine besondere Stabilität gegeben ist.

Vom vorderen Ende des Transferpins 18 erstreckt sich bei diesem Ausführungsbeispiel eine Reckstange 24 in den domförmigen, geschlossenen Bereich des Preforms. Über diese Reckstange 24 kann nun Luft unter Druck dem Innenraum des Preforms zugeführt werden. Gemäß einer besonderen Ausführungsform kann auch die Reckstange selbst als eine Art Stempel ausgebildet sein und den Bodenbereich den Preforms durch Aufbringen eines stempelartigen Druckes verformen. Natürlich kann auch beide Varianten - Stempel und Luftdruck - kombiniert werden.

Durch den Aufbau eines Überdrucks im Bereich von 0,5 - 8 bar wird der Preform mit seinen Außenwänden gegen die Innenwand der als Kühlhülse wirkenden Entnahmehülse 12 gedrückt, so dass eine besonders gute Temperierung und Rekalibrierung stattfindet.

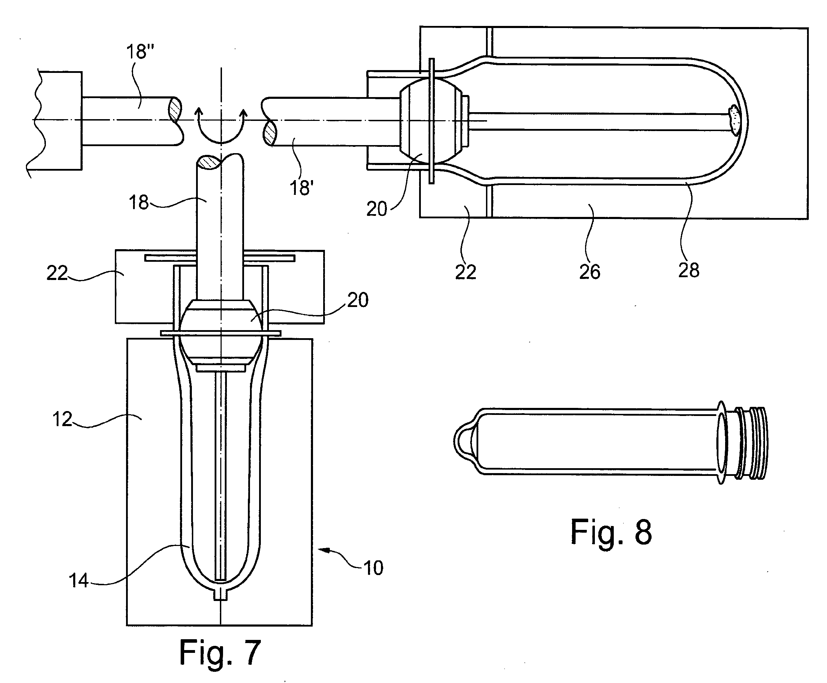

Ist die Kavität des Entnahmegreifers entsprechend ausgestaltet, kann in dieser Position bereits der Bodenbereich ausgeblasen werden, solange dabei keine Hinterschnitte entstehen und der Preform in einer sicheren Kontur gehalten wird. Damit können unter anderem Preformkonturen mit einem sog. Capello-Design erzeugt werden, wie dies in Fig. 8 dargestellt ist.

Überdies sind an jedem Transferpin 18 des Transfergreifers 16 vorliegend zweiteilige Backen 22 angeordnet, wobei die beiden Backenelemente radial auseinander und zueinander verfahren werden können. Die für die Bewegung der Backen notwendige Mimik und Einrichtung ist in den Figuren nicht dargestellt. In Fig. 4 sind die beiden Backenelemente radial nach außen verfahren. Werden diese Backenelemente radial nach innen verfahren, so umgeben sie den Hals- oder Neckbereich des Preforms (oder zumindest Teile davon) formschlüssig, wie später anhand von Fig. 5 noch dargestellt werden kann.

Die Entnahmevorrichtung 10 mit den Entnahmehülsen 12 dient somit nicht nur zur Entnahme der Preforms aus dem Spritzgießwerkzeug, sondern auch zur Vorkonditionierung auf eine bestimmte Temperatur, beispielsweise 120°. In diesem Temperaturbereich wird die Kristallisationsgefahr bereits signifikant reduziert, jedoch weiterhin eine Plastizität des Preforms aufrecht erhalten, unter der der Preform verformt werden kann. Da die Konditionierung auf einen Temperaturbereich von beispielsweise 120° C erfolgt - und nicht auf eine niedrigere Temperatur -, ist eine kürzere Verweilzeit als bisher in dem Entnahmegreifer möglich, was insgesamt zur Zykluszeitverkürzung beitragen kann. Diese Vorkonditionierung stellt auch einen ersten Unterschied im Vergleich zu den bisher bekannten Arbeits- und Prozessschritten der bestmöglichen Kühlung dar.

Dabei ist anzumerken, dass für den Fall, die Preformen lediglich in den Entnahmehülsen und nicht noch später in der Nachkühleinrichtung aufzublasen, durchaus eine üblich starke Kühlung in den Entnahmegreifern, anstelle einer Konditionierung, erfolgen kann.

Nach dem Erreichen der Konditionierungstemperatur wird der Preform 14 mittels des Transferpins 18 aus der Entnahmehülse 12 entnommen und, wie in Fig. 7 dargestellt ist, durch Verschwenken in eine Nachkühleinrichtung (Kühlblock) 25 eingeführt. Der Zustand nach dem unmittelbaren Einführen des Preforms 14 in die Kavität der als Blasformvorrichtung 26 dienenden Nachkühleinrichtung 25 ist in Fig. 5 dargestellt. Dabei sind die beiden Backen 22 der jeweiligen Backenvorrichtung eines Transferpins 18 bereits geschlossen, um die Kräfte des Blasens aufnehmen zu können, und umgeben den Halsbereich sowie den Neckring in dem Bereich in dem keine Verformung stattfinden soll im Wesentlichen vollständig. In dem Bereich, in dem Hals- oder Neckbereich von den Backen 22 umgeben wird, wird der Preform von außen abgestützt und kann sich in seiner Dimension nicht verändern. Überdies kann die Backenvorrichtung mit der Blasformvorrichtung 26 koppeln, so dass bis auf die obige Öffnung in der Backenvorrichtung eine vollständig abgeschlossene Kavität entsteht. Dabei sind die Backen vorliegend wassergekühlt (nicht dargestellt), um so eine möglichst schnelle Wärmeentnahme aus dem Preformbereich mit dicker Wandstärke zu gewährleisten.

Nunmehr wird der noch warme und verformbare Preform durch nochmaliges Einbringen von Luft mit einem entsprechenden Luftdruck von 0,5 - 8 bar aufgeblasen, so dass sich die Preformwandung ausdehnt und an die Innenseite der vergrößert ausgebildeten Nachkühleinrichtung anlegt. Das Ergebnis ist in Fig. 6 zu erkennen, wobei überdies zu erkennen ist, dass sich die Preformwand des Preforms 28 nun erheblich reduziert hat.

Da die Nachkühleinrichtung entsprechend aggressiv gekühlt wird (beispielsweise über Wasserkühlung - nicht dargestellt), kann der Preform 28 recht schnell auf eine gewünschte und für die spätere Verpackung akzeptable Temperatur gebracht werden, da nunmehr eine sehr viel dünnere Wandstärke vorliegt. Nach einer ausreichenden Kühlung wird der auf- und vorgeblasene Preform 28 aus der Blasform der Nachkühleinrichtung entnommen, wobei in Fig. 6 zu erkennen ist, dass diese Entnahme im Schulterbereich unproblematisch ist, da die Backen 22 den Hinterschnitt abdecken und sich durch die Zweiteilung öffnen lassen. Aufgrund der geringeren Wanddicke besteht auch eine geringere Gefahr der Wiederaufwärmung des Preforms 28 nach der Entnahme aus dem gekühlten Bereich.

Nach dem Öffnen der Backenelemente und dem Entspannen der elastischen Greif- und Dichteinrichtung 20 kann der Transferpin 18 aus dem Preform 28 herausgezogen werden, wobei der Preform 28 selbst noch in der Nachkühleinrichtung verbleibt und dort weiter gekühlt wird. Nach einem ausreichenden Kühlvorgang kann der Preform 28 dann über ein Transportband verfahren und durch einen entsprechenden Luftimpuls über nicht dargestellte Luftzuführungen auf ein Transportband ausgeworfen werden.

Wie in Fig. 2 dargestellt, können bei einer entsprechenden Ausbildung der Kavitätswände entweder in der Entnahmehülse oder in der Nachkühleinrichtung beim Aufblasen auch Strukturen in die Außenoberfläche des Preforms 2 eingebracht werden.

Da die voraufgeblasenen Preforms 28 in ihrer Dimension nun größer sind als die ursprünglichen Preforms, können in der als Blasvorrichtung 26 ausgebildeten Nachkühleinrichtung 25 nicht mehr die gleiche Anzahl von Preforms 28 wie bisher aufgenommen werden. Aus diesem Grunde kann es bei einer entsprechenden Leistungsfähigkeit der Maschine notwendig sein, zwei identische Nachkühleinrichtungen 25, beispielsweise oben seitlich der Maschine anzuordnen, und die aus der Entnahmevorrichtung stammenden Preform-Chargen abwechselnd in die eine und die andere Nachkühleinrichtung überzuführen. Dies ist in Fig. 7 schematisch dargestellt, wobei nur eine Entnahmehülse 12 dargestellt ist, von wo aus die Preform-Chargen abwechselnd in die Blasform nach rechts und in die nur ansatzweise Nachkühleinrichtung nach links (nur angedeutet) verschwenkt werden. In der jeweiligen Position ist dann auch der Transferpin (dann Bezugszahlen 18', 18") - hier ohne Reckstange - verschwenkt. Natürlich ist es auch vorteilhaft, wenn jede Nachkühleinrichtung 25 zwei oder mehr Chargen von Preforms aufnehmen kann. Dafür muss aber die Anordnung der Formnester sowohl im Werkzeug als auch im Entnahmegreifer und im Transfergreifer entsprechend abgestimmt sein.

Mit der vorliegenden Erfindung ist es auf einfache Art und Weise möglich, Preforms mit Spezialgeometrien, beispielsweise einem Hinterschnitt im Schulterbereich oder einem Capello-Design, zu generieren, die sowohl bei der eigenen Produktion wie auch bei dem nachfolgenden Aufblasvorgang viele Vorteile aufweisen.

### Bezugszeichenliste

- 1: Dickwandiger Preform
- 2: Dünnwandiger Preform mit Hinterschnitt (erste Geometrie)
- 3: Dünnwandiger Preform mit Hinterschnitt (zweite Geometrie)
- 4: Oberflächenstruktur
- 10: Entnahmegreifer
- 12: Entnahmehülse
- 14: Preform mit Geometrie aus dem Werkzeug
- 16: Transfergreifer
- 18, 18', 18": Transferpin
- 20: Greif- und Dichtvorrichtung
- 22: Backen bzw. Formbacken
- 24: Reckstange
- 25: Kühlblock
- 26: Blasform
- 28: Preform-Geometrie mit Hinterschnitt
- 30: Preform mit einem Capello-Design

## Patentansprüche

1. Verfahren zur Herstellung von Preformen wobei
- in einem Spritzgießwerkzeug, dessen Kavitätsgeometrien der Formnester derart ausgestaltet sind, dass die radiale Erstreckung des Innenraums im damit hergestellten Preformkörper nicht größer ist als die radiale Erstreckung des Innenraums im Halsbereich, Preformen (14) durch Einspritzen einer Kunststoffschmelze hergestellt werden,
- das Spritzgießwerkzeug nach einem ersten Abkühlschritt geöffnet wird,
- und wobei die Preformen (14) mit einem Entnahmegreifer (10) aus dem offenen Werkzeug entnommen werden, wobei der Entnahmegreifer (10) eine Anzahl von Entnahmehülsen (12) aufweist, die jeweils zur Aufnahme von im Spritzgießwerkzeug ausgebildeten Preformen (14) ausgebildet sind,
**dadurch gekennzeichnet, dass**
die Preformen (14) im Entnahmegreifer (10) unter Verwendung von Überdruck gegenüber der im Spritzgießwerkzeug befindlichen Kavität aufgeblasen und mit ihrer Wand an die Wände einer vergrößerten Kavität im Entnahmegreifer (10) angelagert werden, wobei voraufgeblasene Preformen (28) mit einer gegenüber der Kavität des Spritzgießwerkzeugs geänderten, vergrößerten Geometrie hergestellt werden und Preformen mit einer Spezialgeometrie vorliegen, wobei der fertig hergestellte Preform (28) einen Halsbereich mit Gewinde oder einer Verschlusseinrichtung und einen an den Halsbereich anschließenden Preformkörper mit einer gegenüber der Kavität des Spritzgießwerkzeugs geänderten, vergrößerten Geometrie aufweist.

2. Verfahren nach Anspruch 1,
**dadurch gekennzeichnet,**
**dass** bei dem Blasvorgang im Entnahmegreifer (10) der Bodenbereich der Preformen (14) aufgeblasen wird, wobei der Überdruck während des Aufblasvorgangs vorzugsweise im Bereich zwischen 0,5 und 8 bar gehalten wird.

3. Verfahren nach Anspruch 2,
**dadurch gekennzeichnet,**
**dass** der radiale Außenumfang der Preformen (14) konstant gehalten wird.

4. Verfahren nach einem der vorstehenden Ansprüche,
**dadurch gekennzeichnet,**
**dass** die Entnahmehülse (12) des Entnahmegreifers (10) temperiert wird.

5. Verfahren nach Anspruch 4,
**dadurch gekennzeichnet;**
**dass** die Temperierung im Entnahmegreifer (10) zum Konditionieren des Preforms (14) dient, wobei eine Konditionierung vorzugsweise im Temperaturbereich zwischen 90°C und 150°C erfolgt.

6. Verfahren nach Anspruch 4,
**dadurch gekennzeichnet,**
**dass** die Temperierung im Entnahmegreifer (10) anstelle zum Konditionieren des Preforms (14) zum üblichen starken Kühlen erfolgt.

7. Verfahren nach einem der Ansprüche 1 bis 8,
**dadurch gekennzeichnet,**
**dass** bei der Ausbildung des Überdruckes während der Aufnahme des Preforms (14) im Entnahmegreifer (10) der Halsbereich des Preforms (14) von außen abgestützt wird, wobei vorzugsweise sich an die Abstützung des Preforms (14) im Halsbereich unmittelbar die Entnahmehülse (12) des Entnahmegreifers (10) anschließt, derart, dass der Preform (14) vollumfänglich abgestützt wird.

8. Verfahren nach einem der vorhergehenden Ansprüche,
**dadurch gekennzeichnet,**
**dass** nach dem Aufblasvorgang eine Nachkühlung erfolgt.

9. Vorrichtung zur Durchführung des Verfahrens nach einem der Ansprüche 1 bis 8,
- wobei ein Spritzgießwerkzeug mit einer Anzahl von Formnestern für die Ausbildung von Preform-Geometrien vorgesehen ist, wobei die einzelnen Formnestgeometrien derart in ihrer Kavität ausgestaltet sind, dass die radiale Erstreckung des freien Innenraums im Preformkörper nicht größer ist als die radiale Erstreckung des freien Innenraums im Halsbereich,
- eine Plastifizier- und Einspritzeinrichtung vorgesehen ist, um ein Kunststoffmaterial aufzuschmelzen und in die Kavität des geschlossenen Spritzgießwerkzeugs einzubringen,
- ein Entnahmegreifer (10) mit einer Anzahl von Entnahmehülsen (12) vorgesehen ist, die jeweils zur Aufnahme von im Spritzgießwerkzeug ausgebildeten Preformen (14) ausgebildet sind,
**dadurch gekennzeichnet,**
**dass** die Kavitäten der Entnahmehülsen (12) des Entnahmegreifers (10) gegenüber der im Spritzgießwerkzeug realisierten Kavität axial vergrößert sind.

10. Vorrichtung nach Anspruch 9,
**dadurch gekennzeichnet,**
**dass** die Kavitäten im Entnahmegreifer (10) in einem Bodenbereich des Preforms (14) gegenüber den Kavitäten im Spritzgießwerkzeug vergrößert sind.

11. Vorrichtung nach Anspruch 9 oder 10,
**dadurch gekennzeichnet,**
**dass** ein Transfergreifer (16) mit Transferpins (18) vorgesehen ist, die jeweils in einen zugeordneten Preform (14) einbringbar sind, und dass die Transferpins (18) des Transfergreifers (16) eine Abdichteinrichtung zur Abdichtung eines PreformInnenraums und eine Fluidausbringeinrichtung zum Einbringen von Fluid in den Preform-Innenraum aufweisen.

12. Vorrichtung nach einem der Ansprüche 9 bis 11,
**dadurch gekennzeichnet,**
**dass** die Entnahmehülsen (12) temperierbar ausgebildet sind.

13. Vorrichtung nach einem der Ansprüche 9 bis 12,
**dadurch gekennzeichnet,**
**dass** für jeden Transferpin (18) am Transfergreifer (16) eine Backenvorrichtung mit zumindest zwei Backen (22) vorgesehen ist, die sich zumindest radial öffnen und um zumindest einen Teil des Halsbereichs des zugeordneten Preforms schließen lassen.

14. Vorrichtung nach einem der Ansprüche 9 bis 13,
**dadurch gekennzeichnet,**
**dass** die Transferpins (18) jeweils eine Reckstange (24) aufweisen.

15. Vorrichtung nach einem der Ansprüche 9 bis 14,
**dadurch gekennzeichnet,**
**dass** die Kavitätswände der Entnahmehülsen (12) eine Oberflächenstruktur (4) besitzen.

## Claims

1. A method for producing preforms wherein
- in an injection mould, the cavity geometries of the impressions are configured such that the radial extent of the interior in the preform body produced thereby is not greater than the radial extent of the interior in the neck region, preforms (14) are produced by injecting of a plastic melt,
- the injection mould is opened after a first cooling step,
- and wherein the preforms (14) are removed from the open mould by a removal gripper (10), wherein the removal gripper (10) has a number of removal sleeves (12), which are constructed respectively to receive preforms (14) formed in the injection mould,
**characterized in that**
the preforms (14) in the removal gripper (10) are inflated using positive pressure with respect to the cavity situated in the injection mould and are placed, with their wall, against the walls of an enlarged cavity in the removal gripper (10), wherein pre-inflated preforms (28) with an enlarged geometry, altered with respect to the cavity of the injection mould, are produced, and preforms with a special geometry are present, wherein the finished produced preform (28) has a neck region with a thread or a closure arrangement and a preform body, adjoining the neck region, with an enlarged geometry, altered with respect to the cavity of the injection mould.

2. The method according to Claim 1, **characterized in that** in the blowing process in the removal gripper (10), the base region of the preforms (14) is inflated, wherein the positive pressure during the inflation process is preferably kept in the range between 0.5 and 8 bar.

3. The method according to Claim 2, **characterized in that** the radial outer circumference of the preforms (14) is kept constant.

4. The method according to one of the preceding claims, **characterized in that** the removal sleeve (12) of the removal gripper (10) is tempered.

5. The method according to Claim 4, **characterized in that** the tempering in the removal gripper (10) serves for conditioning the preform (14), wherein a conditioning takes place preferably in the temperature range between 90°C and 150°C.

6. The method according to Claim 4, **characterized in that** the tempering in the removal gripper (10), instead of for conditioning the preform (14), takes place for the conventional intense cooling.

7. The method according to one of Claims 1 to 8, **characterized in that** with the formation of the positive pressure during the receiving of the preform (14) in the removal gripper (10), the neck region of the preform (14) is supported from the exterior, wherein the removal sleeve (12) of the removal gripper (10) preferably immediately adjoins the support of the preform (14) in the neck region, such that the preform (14) is completely supported.

8. The method according to one of the preceding claims, **characterized in that** after the inflation process, an after-cooling takes place.

9. A device for carrying out the method according to one of Claims 1 to 8,
- wherein an injection mould is provided with a number of impressions for the formation of preform geometries, wherein the individual impression geometries are configured in their cavity such that the radial extent of the free interior in the preform body is not greater than the radial extent of the free interior in the neck region,
- a plasticizing- and injecting arrangement is provided, in order to melt a plastic material and to introduce it into the cavity of the closed injection mould,
- a removal gripper (10) is provided with a number of removal sleeves (12), which are respectively constructed to receive performs (14) formed in the injection mould,
**characterized in that**
the cavities of the removal sleeves (12) of the removal gripper (10) are axially enlarged with respect to the cavity realized in the injection mould.

10. The device according to Claim 9, **characterized in that** the cavities in the removal gripper (10) are enlarged in a base region of the preform (14) with respect to the cavities in the injection mould.

11. The device according to Claim 9 or 10, **characterized in that** a transfer gripper (16) is provided with transfer pins (18), which are able to be introduced respectively into an associated preform (14), and that the transfer pins (18) of the transfer gripper (16) have a sealing arrangement for sealing a preform interior and a fluid production arrangement for the introduction of fluid into the preform interior.

12. The device according to one of Claims 9 to 11, **characterized in that** the removal sleeves (12) are constructed so as to be able to be tempered.

13. The device according to one of Claims 9 to 12, **characterized in that** for each transfer pin (18) on the transfer gripper (16) a jaw device is provided with at least two jaws (22), which can be at least radially opened and can be closed around at least a portion of the neck region of the associated preform.

14. The device according to one of Claims 9 to 13, **characterized in that** the transfer pins (18) respectively have a stretching rod (24).

15. The device according to one of Claims 9 to 14, **characterized in that** the cavity walls of the removal sleeves (12) have a surface structure (4).

## Revendications

1. Procédé de fabrication de préformes dans lequel
- des préformes (14) sont fabriquées par injection d'une fonte plastique dans un outil de moulage par injection dont les géométries de cavité des moitiés de moule sont ainsi formées de telle sorte que l'extension radiale de l'espace intérieur dans le corps de préforme ainsi fabriqué est inférieure ou égale à l'extension radiale de l'espace intérieur dans le col,
- l'outil de moulage par injection est ouvert après une première étape de refroidissement,
- et dans lequel les préformes (14) sont prélevées de l'outil ouvert par un grappin de prélèvement (10), dans lequel le grappin de prélèvement (10) présente un nombre de manchons de prélèvement (12) qui sont respectivement conçus pour recevoir des préformes (14) formées dans l'outil de moulage par injection,
**caractérisé en ce que**
les préformes (14) sont soufflées dans le grappin de prélèvement (10) par emploi de surpression par rapport à la cavité se trouvant dans l'outil de moulage par injection et fixées par leur paroi sur les parois d'une cavité agrandie dans le grappin de prélèvement (10), dans lequel des préformes (28) soufflées préalablement sont fabriquées avec une géométrie modifiée et agrandie par rapport à la cavité de l'outil de moulage par injection, dans lequel la préforme (28) terminée présente un col avec filet ou un dispositif de fermeture et un corps de préforme se raccordant sur le col avec une géométrie modifiée et agrandie par rapport à la cavité de l'outil de moulage par injection.

2. Procédé selon la revendication 1, **caractérisé en ce que** lors du soufflage dans le grappin de prélèvement (10), le fond des préformes (14) est soufflé, dans lequel la surpression pendant le soufflage est maintenue de préférence entre 0,5 et 8 bar.

3. Procédé selon la revendication 2, **caractérisé en ce que** le périmètre extérieur radial des préformes (14) est maintenu constant.

4. Procédé selon l'une des revendications précédentes, **caractérisé en ce que** le manchon de prélèvement (12) du grappin de prélèvement (10) est équilibré en température.

5. Procédé selon la revendication 4, **caractérisé en ce que** l'équilibre en température dans le grappin de prélèvement (10) sert à conditionner la préforme (14), dans lequel un conditionnement a lieu de préférence dans une plage de températures entre 90°C et 150°C.

6. Procédé selon la revendication 4, **caractérisé en ce que** l'équilibre en température dans le grappin de prélèvement (10) a lieu à la place du conditionnement des préformes (14) pour le refroidissement puissant habituel.

7. Procédé selon l'une des revendications 1 à 8, **caractérisé en ce que** lors de la formation de la surpression pendant la réception de la préforme (14) dans le grappin de prélèvement (10), le col de la préforme (14) est appuyé par l'extérieur, dans lequel de préférence, le manchon de prélèvement (12) du grappin de prélèvement (10) se raccorde directement sur l'appui de la préforme (14) dans le col, de telle sorte que la préforme (14) est appuyée sur tout son pourtour.

8. Procédé selon l'une des revendications précédentes, **caractérisé en ce qu'**un post-refroidissement a lieu après le soufflage.

9. Dispositif destiné à exécuter le procédé selon l'une des revendications 1 à 8,
- dans lequel un outil de moulage par injection avec un nombre de cavités de moule pour la formation de géométries de préformes est prévu, dans lequel les différentes géométries de cavité de moule sont ainsi formées dans leur cavité que l'extension radiale de l'espace intérieur libre dans le corps de la préforme est inférieur ou égal à l'extension radiale de l'espace intérieur libre dans le col,
- un dispositif de plastification et d'injection est prévu pour fondre une matière plastique et l'introduire dans la cavité de l'outil de moulage par injection fermé,
- un grappin de prélèvement (10) comprenant un nombre de manchons de prélèvement (12) est prévu, qui sont conçus pour recevoir des préformes (14) formées dans l'outil de moulage par injection,
**caractérisé en ce que** les cavités des manchons de prélèvement (12) du grappin de prélèvement (10) sont agrandies axialement par rapport à la cavité réalisée dans l'outil de moulage par injection.

10. Dispositif selon la revendication 9, **caractérisé en ce que** les cavités dans le grappin de prélèvement (10) sont agrandies dans un fond de la préforme (14) par rapport aux cavités dans l'outil de moulage par injection.

11. Dispositif selon la revendication 9 ou 10, **caractérisé en ce qu'**un grappin de transfert (16) avec des broches de transfert (18) est prévu, qui peuvent être introduites respectivement dans une préforme (14) correspondante, et que les broches de transfert (18) du grappin de transfert (16) présentent un dispositif d'étanchéité pour étanchéifier un espace intérieur de préforme et un dispositif de pulvérisation de fluide pour introduire du fluide dans l'espace intérieur de préforme.

12. Dispositif selon l'une des revendications 9 à 11, **caractérisé en ce que** les manchons de prélèvement (12) sont conçus en pouvant être équilibrés en température.

13. Dispositif selon l'une des revendications 9 à 12, **caractérisé en ce qu'**il est prévu un dispositif de mâchoires comprenant au moins deux mâchoires (22) pour chaque broche de transfert (18) sur le grappin de transfert (16) qui s'ouvrent au moins radialement et pour faire fermer au moins une partie du col de la préforme correspondante.

14. Dispositif selon l'une des revendications 9 à 13, **caractérisé en ce que** les broches de transfert (18) présentent chacune une barre d'étirage (24).

15. Dispositif selon l'une des revendications 9 à 14, **caractérisé en ce que** les parois de cavité des manchons de prélèvement (12) possèdent une surface structurée (4).
